# EUROPEAN PATENT APPLICATION

(11) **EP 2 629 208 A2**
(43) Date of publication of application: **21.08.2013**
(21) Application number: 11832683.4
(22) Date of filing: 28.07.2011
(51) Int. Cl.: G06F 15/16, G06F 17/30

(54) **CLOUD SYSTEM AND FILE COMPRESSION AND TRANSMISSION METHOD IN A CLOUD SYSTEM**

(30) Priority: 11.10.2010 KR 20100098579
(71) Applicant: Estsoft Corp., Seoul 151-836 (KR)
(72) Inventor: KIM, Jang-Joong, Seoul 151-815 (KR)
(74) Representative: Schumacher & Willsau
(86) International application number: PCT/KR2011/005557
(87) International publication number: WO 2012/050296

(57) **Abstract**

The present invention relates to a cloud system and a method for compressing and sending a file in the cloud system, wherein when a user who accesses a cloud computing system and uploads or downloads files requests a target compression file to be compressed, whether the same file as the target compression file is stored in the cloud system or not is check and if, as a result of the check, the same file is present, an ID code of the target compression file is stored while compressing the target compression file. In accordance with the present invention, there are advantages in that a load of the cloud system can be reduced and there is a marginal network band because the same file is not redundantly stored if the same file is present in the cloud system.

## Description

### [Technical Field]

The present invention relates to a cloud system and a method for compressing and sending a file in the cloud system and, more particularly, to a cloud system and a method for compressing and sending a file in the cloud system, wherein when a user who accesses a cloud computing system and uploads or downloads files requests a target compression file to be compressed, whether the same file as the target compression file is stored in the cloud system or not is check and if, as a result of the check, the same file is present, an ID code of the target compression file is stored while compressing the target compression file.

### [Background Art]

Recently, there is an increasing interest in cloud computing technology, that is, Internet-based computing technology. Cloud computing technology refers to technology in which the resources of computers present at different physical locations are integrated by virtualization technology and provided. That is, cloud computing technology refers to a computer environment focused on a user who can store programs or documents, individually stored in a personal computer or the server of a company, in a large-scale computer accessible over the Internet and performs a desired task by driving a desired application, such as a web browser, through a variety of terminals, such as a mobile terminal, as well as a personal PC.

In this cloud computing technology, information is permanently stored in a server on the Internet, whereas the information is temporally stored in a client terminal, such as a desktop computer, a table computer, a laptop computer, or a portable device.

A full-scale cloud computing environment has not yet been implemented, but Google DOCs by Google, Work Space by Microsoft, and Acrobat. Com by Adobe provide limited cloud computing services.

A user requests desired service through a service catalog provided by a service provider. In response to the request, the system management module of the service provider obtains necessary resources over a virtualized server network. A user uses only service, but does not know detailed information about how is service provided, at which place are his data and information stored, and what server located at which place is used.

If a user has a terminal having an Internet access function and a basic operation function, the user can perform tasks requiring high-performance computing resources along with a high-capacity storage device and also use high-level services over the Internet anywhere. In this sense, cloud computing will emerge as a kernel computing environment that will implement a ubiquitous era in the future.

If a user uploads or compresses and stores a specific file, the same file as the specific file or the compression file of the specific file may be already stored in a cloud computing system. In this case, if the same file is generated or a process of compressing the specific file is performed, system resources are wasted and it will give a load on a network band. Furthermore, the meaning of cloud computing for reducing a system load by distributing tasks over a network is cut in half.

### [Disclosure]

### [Technical Problem]

An object of the present invention is to provide a cloud system and a method for compressing and sending a file in the cloud system, wherein when compressing a specific file, a user checks whether the same file as the specific file is already present in a cloud system or not, compresses the specific file and generates an ID code of the specific file on which a location where the same file is present can be identified if, as a result of the check, the same file is present, and stores the ID code together with the compressed file.

Another object of the present invention is to provide a cloud system and a method for compressing and sending a file in the cloud system, wherein if the same file as a target compression file is not present, the target compression file is transmitted to a cloud system and an ID code of the target compression file is stored while compressing the target compression file.

Yet another object of the present invention is to provide a cloud system and a method for compressing and sending a file in the cloud system, wherein when one user sends a file to the other user over a network, only a file link indicative of a location where the file is stored is transmitted in order to reduce a load of a network band that may occur when sending the file and the time taken to send the file.

### [Technical Solution]

In accordance with an aspect of the present invention, a cloud system for searching for a file identical with the original file on which compression has been requested by a user, generating an ID code for identifying the identical file, and sending the identical file includes a search engine 102 configured to compare the file stored in the system with the original file in order to check whether the original file has already been stored in the system or not; an ID code generation module 104 configured to generate the ID code including information about a location of the original file where the original file is stored in the system; a file compression module 106 configured to compress the original file or decompress a compression file stored in the system by using a compression and decompression algorithm in the state in which the ID code of the original file is included and to generate a virtual compression file including information on which the identity of the original file is able to be checked and the location information; a compression file search module 108 configured to search for a compression file having an ID code identical with an ID code received from a user terminal, from among compression files compressed in the state in which respective ID codes have been included and stored in the system, when the ID code, together with a compression file search request, is received from the user terminal; and a file DB 110 configured to store the original file and a compression file generated when the file compression module 106 compressed the original file.

The ID code includes one or more of the name of a directory in which the original file is stored, the name of the file, the capacity of the file, a recorded date of the file, and information about a data storage region.

The ID code further includes a hash value, generated by extracting some of the original file, as information on which the identity of the original file is able to be checked.

The hash value is a check value generated in accordance with a checksum method or a Cyclic Redundancy Check (CRC) method using an MD5 algorithm.

In accordance with another aspect of the present invention, a method of compressing and sending a file using a cloud system includes a first step of, when a user terminal accesses the cloud system over an Internet and makes a request to compress the original file, a search engine 102 checking whether the original file has been stored in the cloud system or not by searching a file DB 110; a second step of, if, as a result of the check, the original file is not stored in the cloud system, the user terminal sending the original file to the cloud system so that the original file is stored in the file DB 110; a third step of the ID code generation module 104 generating an ID code based on the original file stored in the cloud system; a fourth step of a file compression module 106 generating a compression file by compressing the original file including the ID code and storing the generated compression file in the cloud system; and a fifth step of the file compression module 106 generating a virtual compression file and sending the virtual compression file to the user terminal.

The second step includes a step of the ID code generation module 104 fetching a file identical with the original file if, as a result of the check, the original file is stored in the cloud system.

The ID code includes one or more of the name of a directory in which the original file is stored, the name of the file, the capacity of the file, a recorded date of the file, and information about a data storage region.

The ID code further includes a hash value, generated by extracting some of the original file, as information on which the identity of the original file is able to be checked.

The hash value is a check value generated in accordance with a checksum method or a Cyclic Redundancy Check (CRC) method using an MD5 algorithm.

The virtual compression file includes information about a location of the original file and the hash value for the original file.

The method further includes a sixth step of, when a recipient who has received e-mail to which the virtual compression file has been attached selects to open the virtual compression file, the user terminal of the recipient extracting the location information and the hash value included in the virtual compression file; a seventh step of, when the location information and the hash value are transmitted from the user terminal of the recipient to the cloud system, a compression file search module 108 searching for a compression file based on the location information and fetching the retrieved compression file; an eighth step of a file compression module 106 decompressing the fetched compression file; and a ninth step of the cloud system sending the decompressed file to the user terminal of the recipient.

### [Advantageous Effects]

In accordance with the present invention, there are advantage in that a load of a cloud system can be reduced and there is a marginal network band because the same file is not redundantly stored if the same file is already present in the cloud system.

Furthermore, there are advantages in that the transfer rate of a file can be increased and the time taken to send a file can be reduced because only an ID code for a file link to a high-capacity file is transmitted without sending a real file or a compression file when sending the high-capacity file to another user.

### [Description of Drawings]

FIG. 1 is a block diagram showing the construction of a cloud system in accordance with an embodiment of the present invention;
FIG. 2 is a flowchart illustrating a file compression process in accordance with the present invention; and
FIG. 3 is a flowchart illustrating a file transfer process in accordance with the present invention.

### <Description of reference numerals of principal elements in the drawings>

100: cloud system
102: search engine
104: ID code generation module
106: file compression module
108: compression file search module
110: file DB
200: user terminal

### [Mode for Invention]

A cloud system and a method for compressing and sending a file in the cloud system are described below with reference to the accompanying drawings.

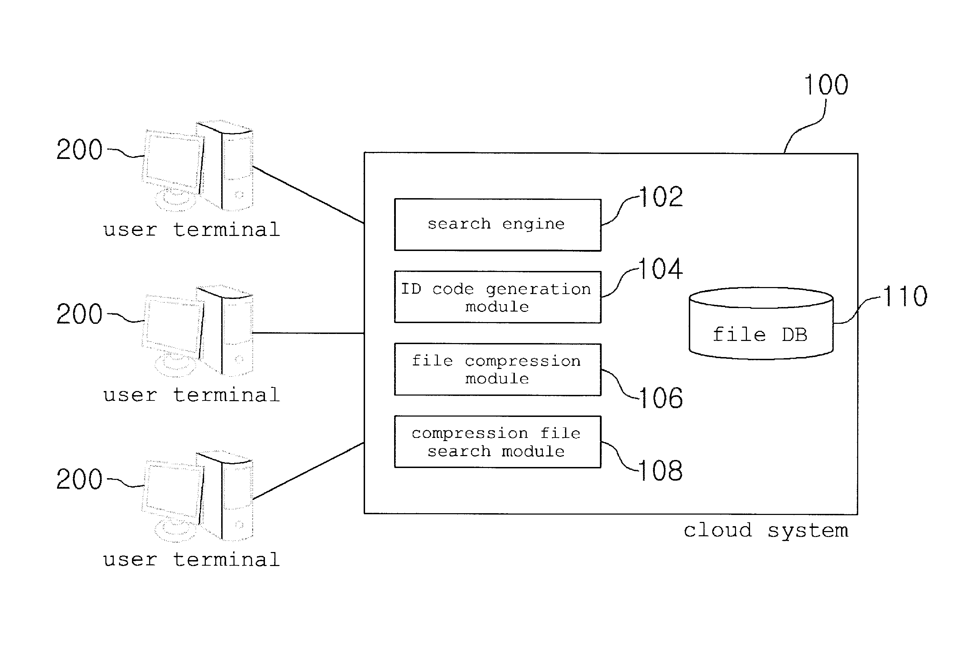

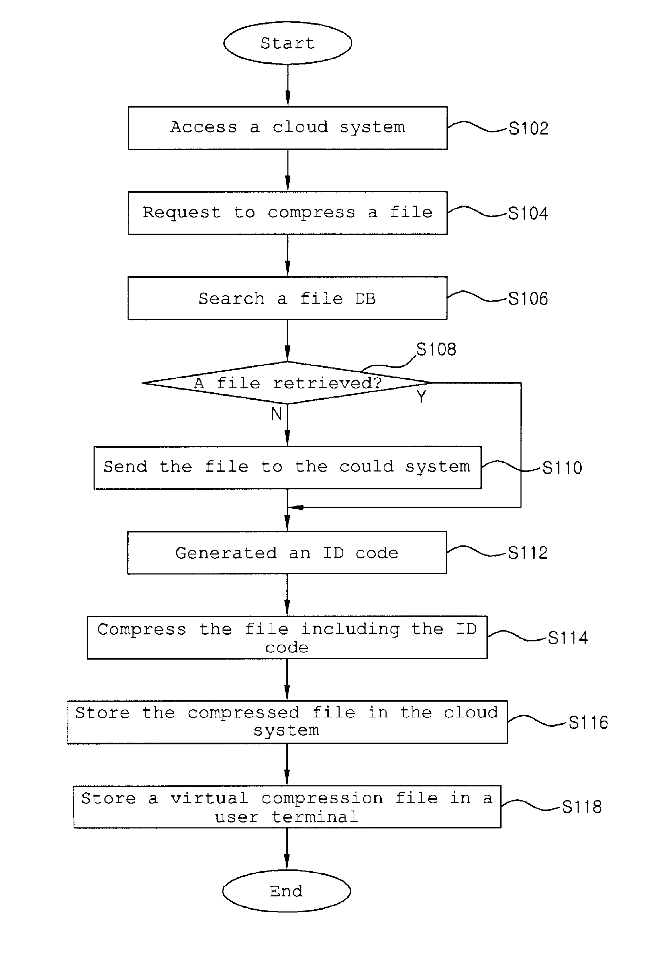

FIG. 1 is a block diagram showing the construction of a cloud system in accordance with an embodiment of the present invention, and FIG. 2 is a flowchart illustrating a file compression process in accordance with the present invention.

The cloud system 100 of the present invention is connected to a plurality of user terminals 200 over the Internet and is equipped with a space capable of storing a variety of programs, applications, documents, and image files. Users can access the cloud system 100 over the Internet, execute a variety of programs, store data generated as the results of tasks in the cloud system 100, and fetch and use the generated data.

In the present invention, a description of a program storage unit, network access equipment, and an application program interface necessary for common operations of the cloud system 100 is omitted.

The cloud system 100 includes a search engine 102. The search engine 102 searches the cloud system 100 for a file on which a user has requested compression. The search engine 102 can include a file comparison function for comparing a file (i.e., the original file) on which a user has requested compression with a file stored in the cloud system 100 in order to know whether the original file is the same as the stored file.

In order to compare the two files with each other, to analyze all the files may be correct, but some of the two files may be compared with each other in order to reduce the time and a load. For example, the headers and former parts of the two files may be extracted and compared with each other, or only some of the middle parts of the two files may be compared with each other. An algorithm for checking the identity of a file is disclosed prior to the filing date of this application, and a detailed description thereof is omitted.

The cloud system 100 further includes an ID code generation module 104 for generating information on which a location of the cloud system 100 where a specific file is stored can be checked. If the search engine 102 has retrieved a file requested by a user, the ID code generation module 104 generates an ID code on which a location of the file DB 110 where the requested file is placed can be easily checked. The ID code can include information about the file (e.g., the directory name of the file, the name of the file, the capacity of the file, and a recorded date of the file, and information about a data storage region (e.g., a sector or a block number) on which a location where the file is stored can be checked.

The ID code may further include information (e.g., a hash value) on which the identity of the file can be checked. To this end, the hash value is generated by extracting some of the file. A checksum generation method or a Cyclic Redundancy Check (CRC) method according to an MD5 algorithm can be applied to an algorithm for generating the hash value.

In the CRC method, a check value for checking whether or not there is an error in data when the data is transmitted over a network is determined.

A CRC check value is calculated based on a value of data before the data is transmitted, the calculated CRC check value is attached to the data, and a CRC check value is calculated again based on a value of data received after the data to which the calculated CRC check value has been attached is transmitted. The two CRC check values are compared with each other. If, as a result of the check, the two CRC check values are different from each other, it can be seen that an error has been attached because of noise in the data transmission process.

The CRC method can be easily implemented in hardware based on a binary method and is excellent in detecting errors that frequently occur in a data transmission process.

A generated ID code is stored in the cloud system 100 or the user terminal 200. If there is a request from a user, information stored in the generated ID code can be extracted and whether a corresponding file is the same file or not a location where the corresponding file is stored can be rapidly checked based on the extracted information.

The cloud system 100 further includes a file compression module 106 for compressing and storing a file or decompressing a file by using a common compression and decompression algorithm. The compression of a file is performed when the file is received from the user terminal 200 and the received file is stored because the same file is not present in the cloud system 100.

Furthermore, the file compression module 106 generates a virtual compression file. The virtual compression file refers to a file rarely having information about the original file, but having only information (i.e., a hash value) for checking the identity of the original file (e.g., a compression state or a non-compression state) and information about the location of the file. The virtual compression file is stored in the user terminal 200. A user who tries to compress a file can receive a real file by clicking on a virtual compression file stored in his user terminal 200 and thus may think that the real file is the same as the compression file.

The cloud system 100 further includes a compression file search module 108. The compression file search module 108 functions to search for a file having the same ID code, from among compression files stored in the cloud system 100, in response to a compression file search request received from the user terminal 200 and send the retrieved compression file.

The cloud system 100 further includes a file DB 110 for storing files stored in the cloud system 100 temporally or permanently. The file DB 110 can store both the original file having a non-compression state and a compression file having a compression state. An ID code may be stored in the stored file.

A method of compressing and sending a file by using the cloud system 100 is described below with reference to the accompanying drawings. First, a process of compressing and storing a file is described.

Referring to FIG. 2, the user terminal 200 accesses the cloud system 100 at step S102. The user of the user terminal 200 accesses the cloud system 100, executes a variety of application programs, generates documents and/or images, and stores the generated documents and/or images in the file DB 110. The cloud system 100 assigns a storage space having a specific capacity to the user.

The user can request a specific file having a high capacity, from among generated files, to be compressed in order to transfer the requested file to others at step S104. In response to the compression request for the specific file (i.e., the original file), the search engine 102 searches the file DB 110 for the same file as the original file on which the user has requested compression at step S106.

If, as a result of the search by the search engine 102, the same file as the original file is not retrieved, the user terminal 200 sends the original file to the cloud system 100 so that the original file is stored at step S110. The transmitted original file is stored in the file DB 110.

If, as a result of the search by the search engine 102, the same file as the original file is retrieved or the original file has already been received from the user terminal 200 and stored, the ID code generation module 104 fetches the same file as the original file (or the original file received from the user terminal 200 and stored) and generates an ID code based on the fetched original file at step S112. The ID code includes a hash value for determining the identity of the original file and information about the location of the original file where the original file has been stored.

The generated ID code, together with other files, may be stored in the file DB 110, but may be stored in an additional DB for convenience of identification and search.

The file compression module 106 compresses the original file in accordance with a common compression and decompression algorithm at step S114. When the original file is compressed, the generated ID code is included in the compressed original file.

The compression file is stored in the file DB 110 at step S116.

Next, the file compression module 106 generates a virtual compression file including the hash value for checking the identity of the original file and the location information and sends the generated virtual compression file to the user terminal 200 so that the generated virtual compression file is stored at step S118.

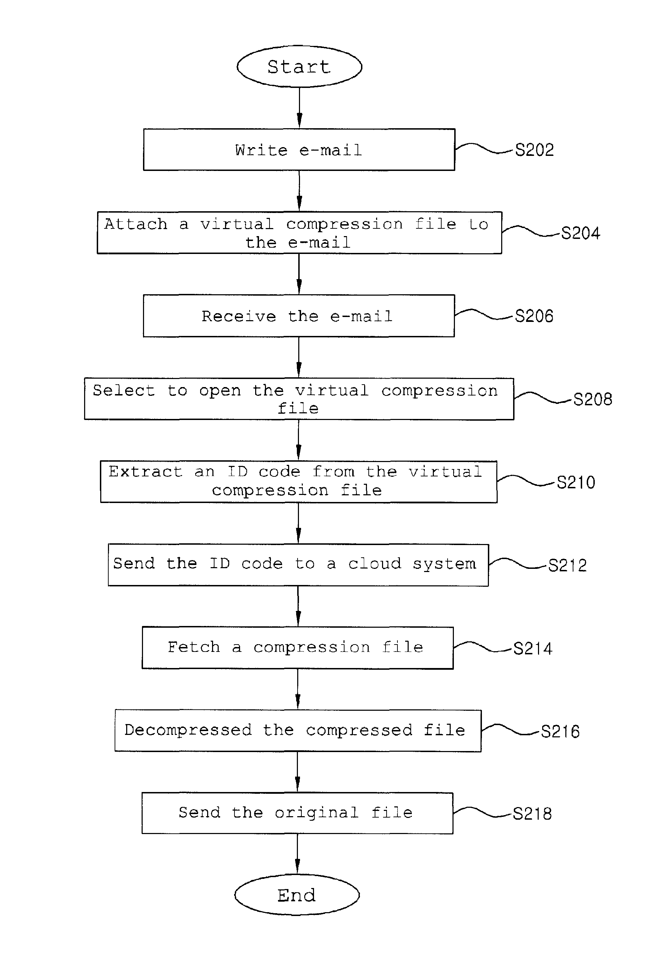

Meanwhile, FIG. 3 is a flowchart illustrating a file transfer process in accordance with the present invention. A process in which a user sends a file, compressed and stored in the cloud system 100 by the user, to another user is described below.

A user who tries to send a compression file writes e-mail to be sent to a recipient at step S202. In the present invention, an example in which the compression file is attached to e-mail is described. In some embodiments, the present invention may include an example in which a file is sent through a messenger system or a file is transferred in different ways.

The user attaches a virtual compression file to the written e-mail at step S204.

The recipient receives the e-mail to which the virtual compression file has been attached at step S206.

The recipient selects to open the virtual compression file at step S208. A method of opening the virtual compression file is performed like a common decompression method or a common method of receiving an attached file. A representative method is to double click on the name of a downloaded compression file by using a mouse.

When the virtual compression file is opened, an ID code included in the virtual compression file is extracted at step S210.

The user terminal 200 of the recipient sends the ID code to the cloud system 100 based on location information included in the extracted ID code at step S212. Since the ID code includes the IP address of the cloud system 100, the user terminal 200 of the recipient can access the cloud system 100 over the Internet.

If a common word file or a Spreadsheet file is compressed, the size of the common word file or the Spreadsheet file is reduced to 10 to 30% of the original file size. An image, music, or moving image file has a relatively low compression rate, but the size of the image, music, or moving image file is more reduced than the size of the original file. In contrast, a lot of time and lots of loads are necessary to send a moving image or a multimedia file to others even in a compression state because the size of the moving image or the multimedia exceeds several hundreds of M bytes. In the present invention, however, a network load can be significantly reduced if a virtual compression file including an ID code is sent.

Meanwhile, the compression file search module 108 of the cloud system 100 from which a compression file transfer request has been made searches for a compression file based on the location information within the ID code and fetches the compression file at step S214.

The file compression module 106 decompresses the fetched compression file at step S216.

The cloud system 100 sends the decompressed original file to the user terminal 200 of the recipient, thereby completing the transfer of the file at step S218.

When the original file is sent without compression as described above, lots of loads is given to a network in a process of sending the original file to a mail server and a process of sending the original file to a recipient. If only a virtual compression file is sent as in the present invention, however, the transfer rate can be enhanced because a network load is taken only when the cloud system 100 sends a decompressed file.

While some embodiments of the present invention have been described with reference to the accompanying drawings, those skilled in the art to which the present invention pertains will understand that the present invention may be implemented in other various forms without departing from the technical spirit or essential characteristics of the present invention. Accordingly, the aforementioned embodiments should not be construed as being limitative, but should be construed as being only illustrative from all aspects. Furthermore, the scope of the present invention is defined by the appended claims rather than the detailed description. It should be understood that all modifications or variations derived from the meanings and scope of the present invention and equivalents thereof are included in the scope of the appended claims.

## Claims

1. A cloud system for searching for a file identical with an original file on which compression has been requested by a user, generating an ID code for identifying the identical file, and sending the identical file, the system comprising:
a search engine 102 configured to compare the file stored in the system with the original file in order to check whether the original file has already been stored in the system or not;
an ID code generation module 104 configured to generate the ID code comprising information about a location of the original file where the original file is stored in the system;
a file compression module 106 configured to compress the original file or decompress a compression file stored in the system by using a compression and decompression algorithm in a state in which the ID code of the original file is included and to generate a virtual compression file comprising information on which an identity of the original file is able to be checked and the location information;
a compression file search module 108 configured to search for a compression file having an ID code identical with an ID code received from a user terminal, from among compression files compressed in a state in which respective ID codes have been included and stored in the system, when the ID code, together with a compression file search request, is received from the user terminal; and
a file DB 110 configured to store the original file and a compression file generated when the file compression module 106 compressed the original file.

2. The cloud system according to claim 1, wherein the ID code comprises one or more of a name of a directory in which the original file is stored, a name of the file, a capacity of the file, a recorded date of the file, and information about a data storage region.

3. The cloud system according to claim 2, wherein the ID code further comprises a hash value, generated by extracting some of the original file, as information on which the identity of the original file is able to be checked.

4. The cloud system according to claim 3, wherein the hash value is a check value generated in accordance with a checksum method or a Cyclic Redundancy Check (CRC) method using an MD5 algorithm.

5. A method of compressing and sending a file using a cloud system, the method comprising:
a first step of, when a user terminal accesses the cloud system over an Internet and makes a request to compress an original file, a search engine 102 checking whether the original file has been stored in the cloud system or not by searching a file DB 110;
a second step of, if, as a result of the check, the original file is not stored in the cloud system, the user terminal sending the original file to the cloud system so that the original file is stored in the file DB 110;
a third step of the ID code generation module 104 generating an ID code based on the original file stored in the cloud system;
a fourth step of a file compression module 106 generating a compression file by compressing the original file including the ID code and storing the generated compression file in the cloud system; and
a fifth step of the file compression module 106 generating a virtual compression file and sending the virtual compression file to the user terminal.

6. The method of claim 5, wherein the second step comprises a step of the ID code generation module 104 fetching a file identical with the original file if, as a result of the check, the original file is stored in the cloud system.

7. The method of claim 5, wherein the ID code comprises one or more of a name of a directory in which the original file is stored, a name of the file, a capacity of the file, a recorded date of the file, and information about a data storage region.

8. The method of claim 7, wherein the ID code further comprises a hash value, generated by extracting some of the original file, as information on which the identity of the original file is able to be checked.

9. The method of claim 8, wherein the hash value is a check value generated in accordance with a checksum method or a Cyclic Redundancy Check (CRC) method using an MD5 algorithm.

10. The method of claim 8, wherein the virtual compression file comprises information about a location of the original file and the hash value for the original file.

11. The method of claim 10, further comprising:
a sixth step of, when a recipient who has received e-mail to which the virtual compression file has been attached selects to open the virtual compression file, a user terminal of the recipient extracting the location information and the hash value included in the virtual compression file;
a seventh step of, when the location information and the hash value are transmitted from the user terminal of the recipient to the cloud system, a compression file search module 108 searching for a compression file based on the location information and fetching the retrieved compression file;
an eighth step of a file compression module 106 decompressing the fetched compression file; and
a ninth step of the cloud system sending the decompressed file to the user terminal of the recipient.
